# EUROPÄISCHE PATENTANMELDUNG

(11) **EP 1 155 904 A1**
(43) Veröffentlichungstag der Anmeldung: **21.11.2001**
(21) Anmeldenummer: 00110469.4
(22) Anmeldetag: 17.05.2000
(51) Int. Cl.: B60P 1/64

(54) **Vorrichtung zum Aufladen und Abladen eines Behälters auf bzw. von einem Fahrzeug**

(71) Anmelder: Palfinger AG, A-5101 Bergheim (AT)
(72) Erfinder: Ghiretti, André, 82300 Caussade (FR); Ghiretti, Guy, 82300 Monteils (FR)
(74) Vertreter: Torggler, Paul Norbert, Dr.

(57) **Zusammenfassung**

Vorrichtung zum Aufladen und Abladen eines Behälters (1) auf bzw. von einem Fahrzeug (2), wobei der Behälter (1) nahe seinem dem Fahrzeug (2) zugewandten unteren Rand zwei symmetrisch angeordnete Rollen (3) und einen mittig angeordneten Haken (4) aufweist, und wobei die Vorrichtung einen Winkelarm (5) umfaßt, an dessen Ende eine Kupplungseinrichtung (13) angeordnet ist, welche mit einem die Rollen (3) hintergreifenden Hakenpaar (7) versehen und in den Haken (4) einhängbar ist

## Beschreibung

Die Erfindung bezieht sich auf eine Vorrichtung zum Aufladen und Abladen eines Behälters auf bzw. von einem Fahrzeug, wobei der Behälter nahe seinem dem Fahrzeug zugewandten unteren Rand zwei symmetrisch angeordnete Rollen und einen mittig angeordneten Haken aufweist.

Behälter (Container) dieser Art sind in Amerika normiert. Um sie von der Straße auf die Ladefläche eines Lastkraftwagens zu bringen, werden Seilzüge eingesetzt, welche in die mittig angeordneten Haken eingehängt werden. In Europa hingegen sind Container an der dem Fahrzeug zugewandten Wand mit einem Bügel versehen, in welchem ein Winkelarm mittels eines Hakens eingreifen kann, um den Container anzuheben, woraufhin der Winkelarm samt dem daran befestigten Behälter in Fahrzeuglängsrichtung verschoben wird. Der Arm hat die Form eines Winkels mit zwei Zweigen, er schwenkt am Ende eines dieser Zweige aus. Der mit dem Haken versehene Zweig ist teleskopisch. Ein Beispiel für eine derartige Konstruktion zeigt DE 25 57 169 A1.

Der Erfindung liegt die Erkenntnis zugrunde, daß auch Behälter der eingangs definierten Art auf den an sich für die Handhabung europäischer Container konzipierter Abrollkipper mit Winkelarm auf- und abgeladen werden können. Hiezu sieht die Erfindung vor, daß die Vorrichtung einen Winkelarm umfaßt, an dessen Ende eine Kupplungseinrichtung angeordnet ist, welche mit einem die Rollen hintergreifenden Hakenpaar versehen und in den Haken einhängbar ist.

Wenn die erfindungsgemäße Kupplungseinrichtung lediglich für die Handhabung der eingangs definierten Container verwendet werden soll, kann sie einen festen Bestandteil der gesamten Vorrichtung bilden. Wenn wahlweise Container des europäischen und amerikanischen Typs gehandhabt werden sollen, ist die Kupplungseinrichtung als abnehmbarer Adapter auszubilden, was dadurch geschehen kann, daß sie mit einem Bügel versehen ist, in welche der am Winkelarm angeordnete Haken einhängbar ist.

Für die konstruktive Ausführung der Erfindung bieten sich zahlreiche Möglichkeiten an, welche anhand der Zeichnung beispielhaft diskutiert werden.

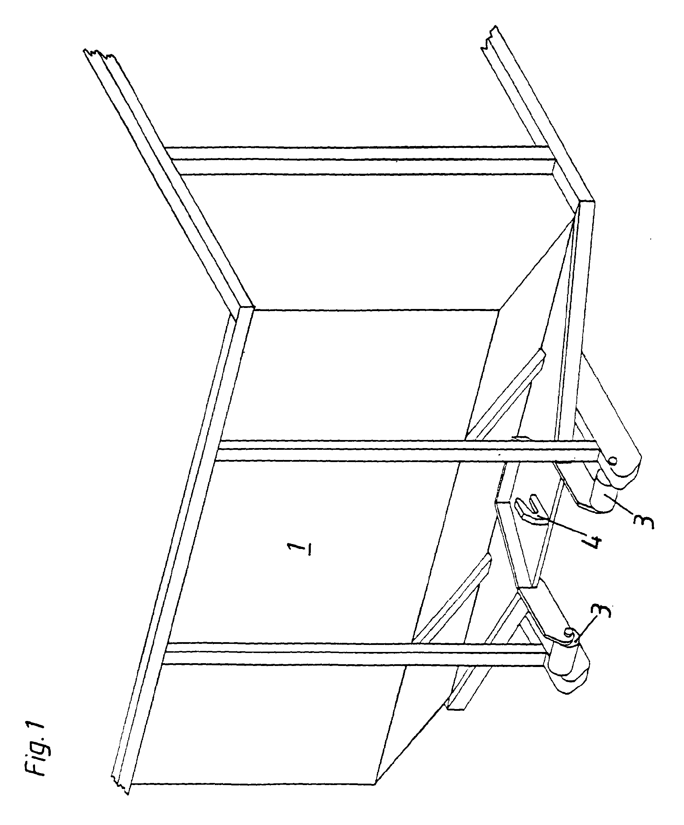

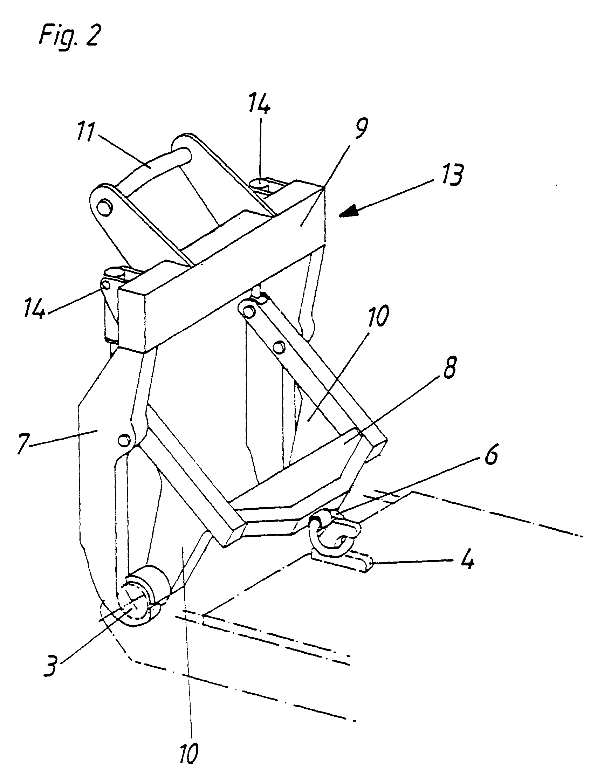

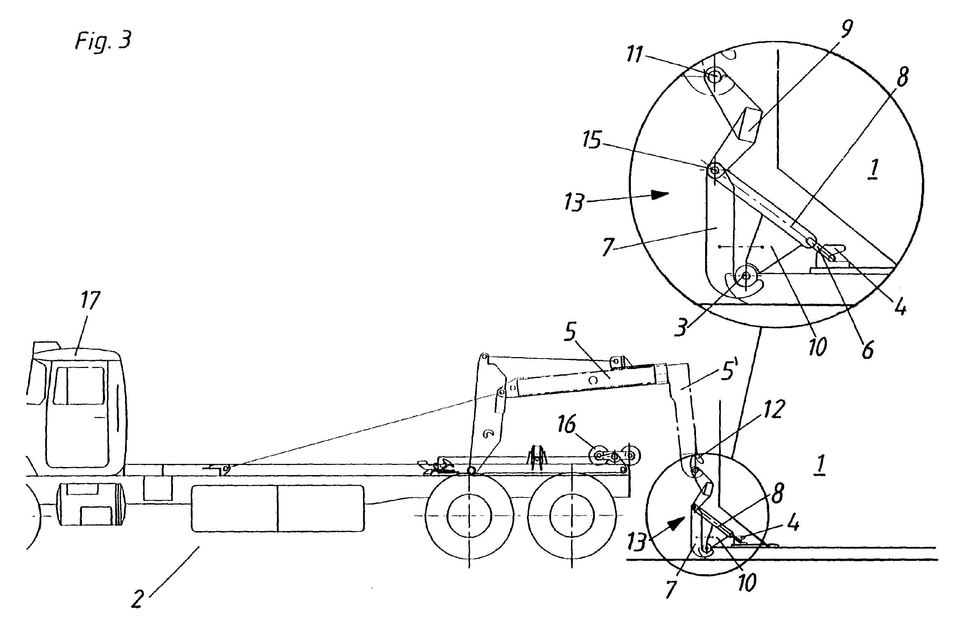

Fig. 1 ist eine schaubildliche Darstellung des Endteiles eines Behälters, der durch die Erfindung gehandhabt werden soll. Fig. 2 zeigt eine erfindungsgemäße Kupplungseinrichtung und ihre Beziehung zum Behälter nach Fig. 1 in Arbeitsstellung, Fig. 3 bis 5 zeigen ein zweites Ausführungsbeispiel der erfindungsgemäßen Kupplungseinrichtung in drei verschiedenen Funktionsstellungen jeweils zusammen mit einem vergrößerten Detail.

Fig. 1 stellt die abgeschrägte untere Vorderkante eines Behälters 1 dar. Unterhalb des abgeschrägten Bereiches ist mittig ein Haken 4 vorgesehen, welcher dazu dienen kann, den Behälter 1 mittels eines Seiles zu bewegen. Weiters sind für den gleichen Zweck zwei symmetrisch angeordnete Rollen 3 vorgesehen.

Fig. 2 stellt ein erstes Ausführungsbeispiel eines Kupplungsteiles 13 dar, welcher es erlaubt, den Container nach Fig. 1 sicher zu erfassen. Wesentlicher Teil dieses Kupplungsteiles 13 ist ein Paar von Haken 7, welche durch eine Traverse 9 verbunden sind. Am Hakenpaar 7 ist ein Schwenkteil 8 in Form eines U-förmigen Rahmens angelenkt, welcher mittels eines Ringes 6 in den Haken 4 eingehängt werden kann. Wenn das Trägerpaar 7 in die Rollen 3 eingehängt ist, stützt sich der Schwenkteil 8 über Streben 10 an den Rollen 3 ab. Damit diese Zuordnung sicher erhalten bleibt, ist der Schwenkteil 8 durch Sperrzylinder 14 in seiner Position fixierbar. Statt einer derartigen hydraulischen Fixierung könnte auch eine mechanische Verriegelung zwischen den Teilen 8 und 7 vorgesehen werden.

Um die Kupplungseinrichtung 13 mittels eines mit einem schwenkbaren Arm versehenen Abrollkippers handhaben zu können, ist der Kipperteil 13 mit einem Bügel 11 versehen. Wenn hingegen nur Behälter gemäß Fig. 1 auf- und abgeladen werden sollen, wäre es auch möglich, den Kupplungsteil 13 dauerhaft über ein Gelenk mit dem in Fig. 3 dargestellten Winkelarm 5 zu verbinden.

Die beim Ausführungsbeispiel nach Fig. 3 bis 5 verwendete Kupplungseinrichtung 13 unterscheidet sich von jener nach Fig. 2 durch ein Gelenk 15, welches die Traverse 9, die den Bügel 11 trägt, schwenkbar mit dem Hakenpaar 7 und dem gegenüber dem Hakenpaar 7 verschwenkbaren Schwenkteil 8 verbindet.

Fig. 3 zeigt das Aufnehmen eines Behälters 1 mittels der Kupplungseinrichtung 13. Durch die Abstützung des Schwenkteiles 8 am Hakenpaar 7 mittels der Streben 10 ist sichergestellt, daß der Kupplungsteil 13 den Behälter 1 nicht beschädigt.

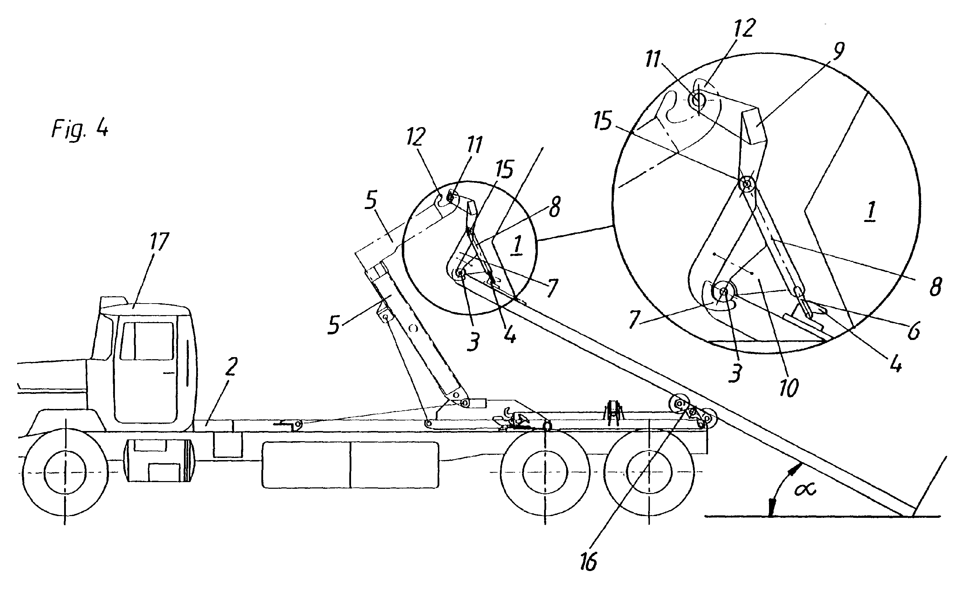

Gelangt der Behälter 1 aus der Stellung nach Fig. 3 in jene nach Fig. 4, indem er über das Rollenpaar 16 gezogen wird, so zeigt sich der Vorteil des Gelenks 15 darin, daß die Länge des Teleskoparmes 5' gering gehalten werden kann. Dadurch ist der Anstellwinkel α, welchen der Behälter 1 erreicht, bevor er auf die Ladefläche des Fahrzeuges 2 gekippt wird, sehr gering.

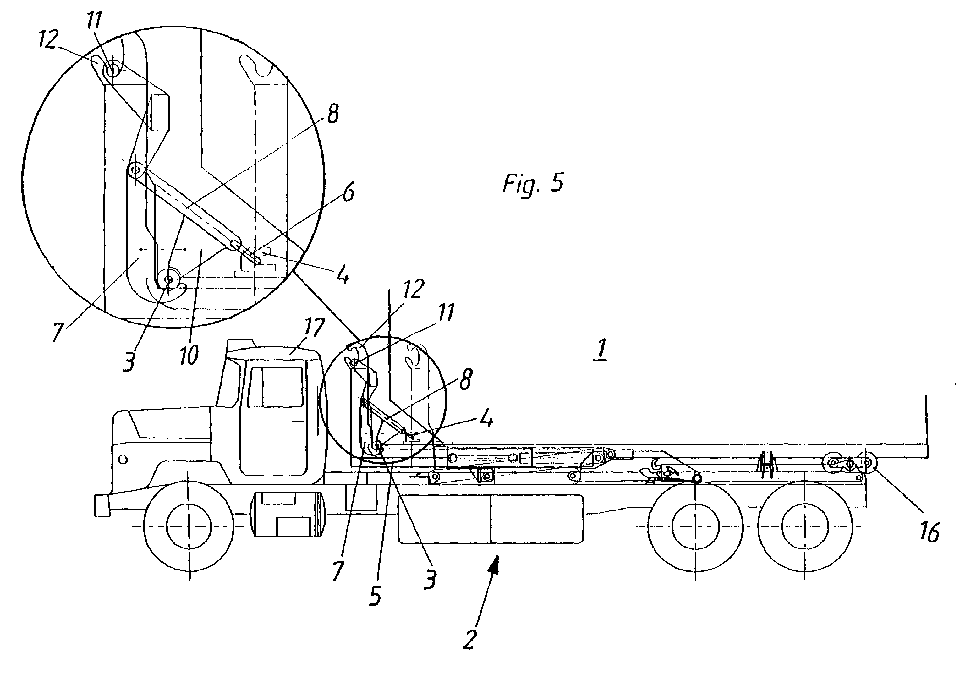

Fig. 5 zeigt die erfindungsgemäße Einrichtung in Fahrstellung und demonstriert, wie die Kupplungseinrichtung 13 zwischen Fahrerhaus 17 und Behälter 1 untergebracht werden kann.

## Patentansprüche

1. Vorrichtung zum Aufladen und Abladen eines Behälters auf bzw. von einem Fahrzeug, wobei der Behälter nahe seinem dem Fahrzeug zugewandten unteren Rand zwei symmetrisch angeordnete Rollen und einen mittig angeordneten Haken aufweist, **dadurch gekennzeichnet, daß** die Vorrichtung einen Winkelarm (5) umfaßt, an dessen Ende eine Kupplungseinrichtung (13) angeordnet ist, welche mit einem die Rollen (3) hintergreifenden Hakenpaar (7) versehen und in den Haken (4) einhängbar ist.

2. Vorrichtung nach Anspruch 1, **dadurch gekennzeichnet, daß** das Hakenpaar (7) durch eine Traverse (9) verbunden ist.

3. Vorrichtung nach Anspruch 1, **dadurch gekennzeichnet, daß** zum Einhängen der Kupplungseinrichtung in den Haken (4) an einem gegenüber dem Hakenpaar (7) verschwenkbaren Schwenkteil (8) angeordneter Ring (6) vorgesehen ist.

4. Vorrichtung nach Anspruch 3, **dadurch gekennzeichnet, daß** der Schwenkteil (8) die Form eines U-förmigen Rechteckrahmens hat.

5. Vorrichtung nach Anspruch 4, **dadurch gekennzeichnet, daß** sich der Schwenkteil (8) über Streben (10) an den Rollen (3) abstützt.

6. Vorrichtung nach Anspruch 5, **dadurch gekennzeichnet, daß** die Stellung des Schwenkteils (8) relativ zu dem Hakenpaar (7) fixierbar ist.

7. Vorrichtung nach einem der vorhergehenden Ansprüche, **dadurch gekennzeichnet, daß** Schwenkteil (8) und Hakenpaar (7) nicht nur relativ zueinander, sondern auch gemeinsam verschwenkbar sind.

8. Vorrichtung nach einem der Ansprüche 1 bis 7, **dadurch gekennzeichnet, daß** der äußerste Schenkel (5') des Winkelarmes (5) aus- und einfahrbar ist.

9. Kupplungseinrichtung zur Verwendung in einer Vorrichtung nach den Ansprüchen 1 bis 8, **dadurch gekennzeichnet, daß** sie mit einem Bügel (11) versehen ist, in welche der am Winkelarm (5) angeordnete Haken (12) einhängbar ist.
